# FASCICULE DE BREVET EUROPEEN

(11) **EP 3 437 158 B1**
(45) Date de publication et mention de la délivrance du brevet: **13.04.2022**
(21) Numéro de dépôt: 17713742.9
(22) Date de dépôt: 09.03.2017
(51) Int. Cl.: F24H 3/04, H01R 9/22

(54) **DISPOSITIF DE CONNEXION ELECTRIQUE, DISPOSITIF DE CHAUFFAGE ET INSTALLATION DE VENTILATION, CHAUFFAGE ET/OU CLIMATISATION**
ELEKTRISCHE VERBINDUNGSVORRICHTUNG, HEIZVORRICHTUNG UND BELÜFTUNGS-, HEIZUNGS- UND/ODER KLIMATISIERUNGSEINHEIT
ELECTRICAL CONNECTION DEVICE, HEATING DEVICE AND VENTILATION, HEATING AND/OR AIR CONDITIONING UNIT

(30) Priorité: 29.03.2016 FR 1652690
(43) Date de publication de la demande: 06.02.2019
(73) Titulaire: Valeo Systemes Thermiques, 78320 Le Mesnil Saint Denis (FR)
(72) Inventeur: PUZENAT, Bertrand, 78322 Le Mesnil Saint Denis Cedex (FR); KARAASLAN, Serif, 78322 Le Mesnil Saint Denis Cedex (FR); BIGEY, Mickael, 78322 Le Mesnil Saint Denis Cedex (FR); PIERRON, Frédéric, 78322 Le Mesnil Saint Denis Cedex (FR)
(74) Mandataire: Valeo Systèmes Thermiques
(86) Numéro de dépôt international: PCT/FR2017/050525
(87) Numéro de publication internationale: WO 2017/168067

(56) Documents cités:
- EP-A1- 1 998 406
- EP-A1- 2 056 036
- EP-A1- 2 863 143
- EP-A2- 0 722 264
- WO-A1-2014/154579

## Description

La présente invention concerne le domaine des installations de ventilation, de chauffage et/ou de climatisation, notamment pour véhicule automobile. En particulier, l'invention concerne un dispositif de connexion électrique destiné à connecter une source d'alimentation électrique et des modules chauffants d'un dispositif de chauffage d'une installation de ventilation, chauffage et/ou climatisation. Elle concerne également un dispositif de chauffage et une installation de ventilation, chauffage et/ou climatisation. Les installations de ventilation, de chauffage et/ou de climatisation équipant les véhicules comportent fréquemment un dispositif de chauffage additionnel électrique qui permet de produire rapidement de la chaleur dans les véhicules, par exemple lorsque l'on souhaite chauffer rapidement l'habitacle et que le moteur est froid. Un tel dispositif de chauffage additionnel comporte des modules chauffants à résistances électriques. Actuellement, chaque dispositif de chauffage additionnel est conçu en fonction de l'architecture de l'installation de ventilation, chauffage et/ou climatisation, de la taille de l'habitacle, des exigences des constructeurs (dégivrage rapide, grande capacité de chauffe au niveau des pieds, etc). En conséquence, les dispositifs de chauffage additionnels montés dans un type de véhicule sont spécifiques à ce type de véhicule.

Le document EP 1 998 406 A1 divulgue un dispositif de connexion conventionnel selon le préambule de la revendication indépendante 1.

Le but de la présente invention est de proposer un dispositif de connexion électrique et un dispositif de chauffage additionnel ayant le plus grand nombre de pièces standards et qui puissent s'adapter à différentes capacités de chauffe ou à différentes exigences des clients.

A cet effet, la présente invention a pour objet un dispositif de connexion électrique selon la revendication 1.

Ainsi, avantageusement, le dispositif de connexion électrique selon la présente invention, peut être monté dans des dispositifs de chauffage pouvant être équipés de module(s) chauffants ayant un nombre variable de rangées d'éléments aptes à produire de la chaleur.

Avantageusement, la carte électronique et le jeu de barres de distribution électrique permettant de conduire le courant électrique sont invariants quel que soit le nombre de rangées d'éléments aptes à produire de la chaleur équipant le dispositif de chauffage additionnel. La standardisation de la carte électronique et du jeu de barres permet de diminuer les coûts de fabrication.

Avantageusement, également, cette standardisation permet de diminuer les coûts de logistique en diminuant le nombre de références produit à gérer. Suivant des modes particuliers de réalisation, le dispositif de connexion électrique comporte l'une ou plusieurs des caractéristiques suivantes, seule ou en combinaison :
- le nombre de contacts électriques d'un module chauffant est compris entre deux et le nombre total de languettes conductrices du dispositif de connexion.
- le nombre de contacts électriques d'un module chauffant ou des modules chauffants connecté(s) électriquement au dispositif de connexion est compris entre deux et le nombre total de languettes conductrices du dispositif de connexion.
- le dispositif de connexion électrique est apte à être connecté à au moins un module chauffant selon une première configuration où toutes les languettes conductrices sont connectées électriquement à des contacts électriques du module chauffant ou des modules chauffants, et une deuxième configuration où seule une partie des languettes conductrices est connectée électriquement à des contacts électriques du ou des modules chauffants.
- les languettes conductrices sont aptes à être déconnectées électriquement des plots correspondants de la source d'alimentation.
- lorsque les languettes conductrices sont connectées à des modules chauffants selon la deuxième configuration, les languettes conductrices qui ne sont pas connectées électriquement à des contacts électriques des modules chauffants sont déconnectées électriquement des plots correspondants de la source d'alimentation.
- le dispositif de connexion électrique comprend deux deuxièmes languettes conductrices disposées l'une à côté de l'autre.
- le dispositif de connexion électrique comprend au moins deux ensembles de languettes conductrices disposés l'un à côté de l'autre, au moins un ensemble comprenant une première languette conductrice disposée entre deux deuxièmes languettes conductrices et au moins un ensemble comprenant une première languette conductrice adjacente à une deuxième languette conductrice.
- dans un même ensemble, la distance entre la première languette conductrice et l'une des deuxièmes languettes conductrices est égale à la distance entre la première languette conductrice et l'autre des deuxièmes languettes conductrices.
- les premières languettes conductrices et les deuxièmes languettes conductrices ont un plan principal qui s'étend dans le même plan.
- les deuxièmes languettes conductrices sont propres à être connectées à la masse ou à un potentiel électrique négatif.
- les deuxièmes languettes conductrices sont propres à être connectées à un potentiel électrique positif.
- le(s) module(s) chauffant(s) comporte(nt) au moins un élément apte à produire de la chaleur et au moins un élément associé apte à échanger de la chaleur avec le flux d'air traversant le(s) module(s) chauffant(s).
- ledit au moins un élément apte à produire de la chaleur est un élément résistif.
- ledit au moins un élément apte à produire de la chaleur est un élément résistif de type à coefficient de température positif (CTP).
- ledit au moins un élément apte à produire de la chaleur est un élément résistif de type à coefficient de température positif (CTP) disposé dans ou sur un support tel qu'un barreau.
- ledit au moins un élément apte à produire de la chaleur est un élément résistif disposé entre deux électrodes.
- ledit au moins un élément associé qui est apte à échanger de la chaleur est un élément radiant.
- ledit au moins un élément associé apte à échanger de la chaleur est au moins une ailette traversée par au moins un élément apte à produire de la chaleur, ou encore des intercalaires tels que des rubans métalliques plissés ou ondulés disposés entre des éléments aptes à produire de la chaleur.
- ledit au moins un élément apte à produire de la chaleur est disposé entre deux éléments aptes à échanger de la chaleur.
- le au moins un module chauffant comporte un élément apte à produire de la chaleur disposé entre deux éléments aptes à échanger de la chaleur.
- le(s) élément(s) apte(s) à produire de la chaleur disposé(s) entre deux électrodes est (sont) disposé(s) selon une rangée, l'extrémité des électrodes définissant lesdits contacts électriques.
- la première liaison électrique comporte une première barre de distribution électrique monobloc. Cette première barre de distribution électrique peut comporter de préférence une première bande conductrice, deux premières languettes conductrices pouvant être de préférence préférentiellement solidaires de l'un des bords de plus grande longueur de la première bande, une première fiche de connexion conductrice pouvant être préférentiellement solidaire du bord opposé de la première bande.
- la deuxième liaison électrique comporte préférentiellement une deuxième barre de distribution électrique monobloc, des deuxièmes languettes conductrices ainsi qu'au moins une piste conductrice et des interrupteurs.
- la deuxième barre de distribution électrique peut comporter une deuxième bande conductrice, des pattes de fixation, et une deuxième fiche de connexion conductrice préférentiellement solidaires du même bord de plus grande longueur de la deuxième bande.

La présente invention concerne également un dispositif de connexion électrique selon l'une des caractéristiques ci-dessus associé avec le ou les module(s) chauffant(s) dont les contacts électriques peuvent être connectés aux languettes conductrices du dispositif de connexion électrique.

La présente invention concerne également un dispositif de chauffage destiné à chauffer un flux d'air circulant à l'intérieur d'une installation de ventilation, chauffage et/ou de climatisation, ledit dispositif de chauffage comportant un boîtier, un dispositif de connexion électrique selon l'une des caractéristiques ci-dessus, monté dans le boîtier, au moins un module chauffant comprenant au moins deux contacts électriques.

Enfin, la présente invention concerne une installation de ventilation, chauffage et/ou climatisation d'un véhicule automobile comportant au moins un dispositif de chauffage ayant les caractéristiques mentionnées ci-dessus.

L'invention sera mieux comprise à la lecture de la description qui va suivre, donnée uniquement à titre d'exemple, et faite en se référant aux figures sur lesquelles :
- la figure 1 est une vue schématique d'une source d'alimentation, et d'un dispositif de chauffage selon l'invention, le dispositif de chauffage étant équipé d'un module chauffant comprenant trois éléments aptes à échanger de la chaleur et d'un module chauffant comprenant deux éléments aptes à échanger de la chaleur ;
- la figure 2 est une vue schématique en coupe du dispositif de connexion électrique selon l'invention selon le plan de coupe illustré sur la figure 1 ;
- la figure 3 est une vue schématique similaire à la figure 1 sur laquelle le dispositif de chauffage est équipé de deux modules chauffants comprenant trois éléments aptes à échanger de la chaleur ;
- la figure 4 est une vue en perspective d'une première barre de distribution électrique montée du dispositif de connexion selon l'invention ;
- la figure 5 est une vue en perspective d'une deuxième barre de distribution électrique et de deuxièmes languettes conductrices du dispositif de connexion selon la présente invention ; et
- la figure 6 est une vue en perspective du jeu de barres de distribution électrique du dispositif de connexion selon l'invention ; et
- la figure 7 est une vue en perspective du dispositif de connexion selon l'invention.

Pour simplifier la description de la présente invention, le dispositif de chauffage additionnel décrit et illustré est propre à être équipé de modules chauffants ayant deux ou trois rangées d'éléments aptes à échanger de la chaleur. Néanmoins, selon la présente invention, le dispositif de chauffage est propre à être équipé de modules chauffants ayant un nombre quelconque de rangées d'éléments aptes à échanger de la chaleur.

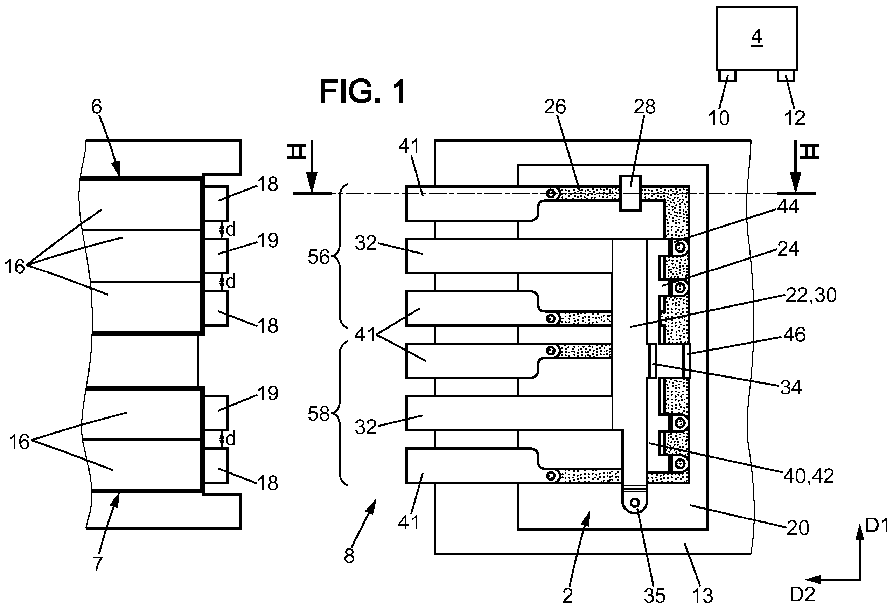

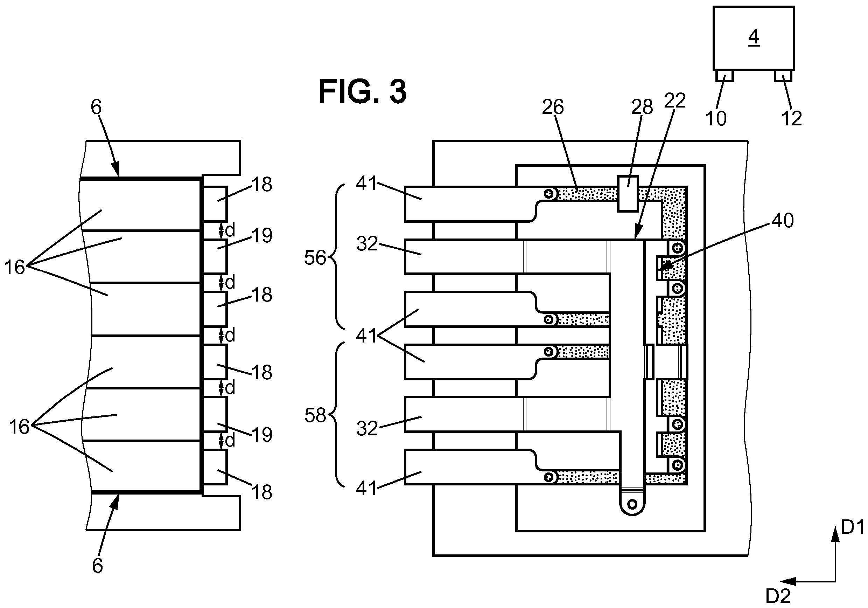

Dans la description qui va suivre, les termes « haut », « bas », « inférieur », « supérieur », « droite » et « gauche » sont définis lorsque le dispositif de connexion selon l'invention est disposé comme illustré sur les figures 1 et 3, et ne sont nullement limitatifs.

En référence à la figure 1, le dispositif de chauffage 8 selon la présente invention comporte un dispositif de connexion 2 destiné à être connecté à une source 4 d'alimentation électrique et à des modules chauffants 6, 7 du dispositif de chauffage 8. Ce dispositif de chauffage 8 est propre à chauffer un flux d'air circulant à l'intérieur d'une installation de ventilation, chauffage et/ou de climatisation.

La source d'alimentation 4 est généralement constituée par une batterie telle que la batterie principale du véhicule, une batterie annexe, ou un alternateur. La source d'alimentation 4 comporte un premier plot 10 de masse et un deuxième plot 12 porté à un potentiel électrique différent du premier plot, par exemple à un potentiel de 12 Volt, de 24 Volt ou 48 Volt et de 250 Volt ou de 330 Volt pour la haute tension.

Le dispositif de chauffage 8 comporte en outre un boîtier 13. Des modules chauffants 6, 7 comprenant un nombre variable de contacts électriques 18, 19 peuvent être agencés dans le boîtier 13 du dispositif de chauffage 8.

Un module chauffant 6 qui comporte trois rangées 16 d'éléments aptes à échanger de la chaleur et trois contacts électriques 18, 19 disposés chacun à une extrémité d'une rangée d'éléments aptes à échanger de la chaleur est agencé dans le boîtier 13. Le contact électrique 19 situé au centre est destiné à être connecté au deuxième plot 12 de tension, et les deux contacts électriques latéraux 18 sont destinés à être connectés au premier plot 10 de masse. Les contacts électriques 18 et 19 d'un module chauffant 6 de ce type sont espacés l'un de l'autre d'une distance d.

Les éléments aptes à produire de la chaleur disposés entre les éléments aptes à échanger de la chaleur sont par exemple des résistances, telles que par exemple des résistances à coefficient de température positif (CTP).

Un autre module chauffant 7 agencé dans le boîtier 13 est similaire au module chauffant 6 à l'exception du fait qu'il comporte deux rangées 16 d'éléments aptes à échanger de la chaleur et deux contacts électriques 18, 19. Un contact électrique 18 est destiné à être connecté au premier plot 10 de masse. L'autre contact électrique 19 est destiné à être connecté au deuxième plot 12 de tension. Les contacts électriques 18 et 19 d'un module chauffant 7 de ce type sont également tous espacés les uns des autres de la distance d.

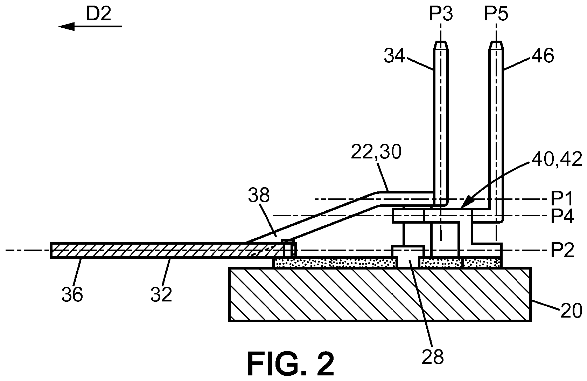

En référence aux figures 1 et 2, le dispositif de connexion 2 comporte un support plan formé par exemple par une carte électronique 20, une première liaison électrique destinée à être connectée au premier plot 10 de la batterie et une deuxième liaison électrique destinée à être connectée au deuxième plot 12 de la batterie.

Selon une variante non décrite, la première liaison électrique est destinée à être connectée au deuxième plot 12 et la deuxième liaison électrique est destinée à être connectée au premier plot 10.

La carte électronique 20 porte des équipements électroniques propres à commander la mise en œuvre sélective de certaines rangées 16 d'éléments aptes à produire de la chaleur. A cet effet, elle porte une piste conductrice 26, quatre interrupteurs 28, quatre pilotes de commande aptes à commander des interrupteurs et une unité de commande propre à commander les pilotes de commande. Les pilotes de commande et l'unité de commande ne sont pas représentés sur les figures.

Les interrupteurs 28 sont de préférence des interrupteurs électroniques tels que par exemple des interrupteurs de type MOSFET. Un seul interrupteur 28 est visible sur la figure 1, les autres étant disposés sous les barres de distribution électrique.

La première liaison électrique est constituée par une première barre de distribution électrique monobloc 22 illustrée sur les figures 1, 2 et 4. Cette première barre de distribution électrique 22 comporte une première bande conductrice 30, deux premières languettes conductrices 32 solidaires de l'un des bords de plus grande longueur de la première bande 30, une première fiche 34 de connexion conductrice solidaire du bord opposé de la première bande 30.

Tel que cela est représenté sur la figure 2, la première bande 30 s'étend dans un premier plan P1 parallèle au plan de la carte électronique 20. Tel que cela est représenté sur la figure 1, la première bande 30 est allongée selon une première direction générale D1. Les deux premières languettes conductrices 32 s'étendent selon une deuxième direction D2 perpendiculaire à la première direction D1. Elles comportent une portion d'extrémité 36 ayant un plan principal qui s'étend dans un deuxième plan P2, et une portion inclinée 38 reliant la portion d'extrémité 36 au bord de la première bande 30. Le deuxième plan P2 est parallèle au premier plan P1. En particulier, il est situé en dessous du premier plan P1. Les portions d'extrémité 36 des premières languettes conductrices 32 sont destinées à être connectées aux contacts électriques 19 des modules chauffants. A cet effet, les portions d'extrémité 36 des premières languettes conductrices s'étendent en saillie par rapport à une face interne du boîtier 13.

La première fiche 34 de connexion électrique présente la forme d'une plaquette qui s'étend dans un troisième plan P3 sensiblement orthogonal au premier plan P1 de la première bande 30. Elle est destinée à être connectée au deuxième plot 12 par des liaisons électriques non représentées.

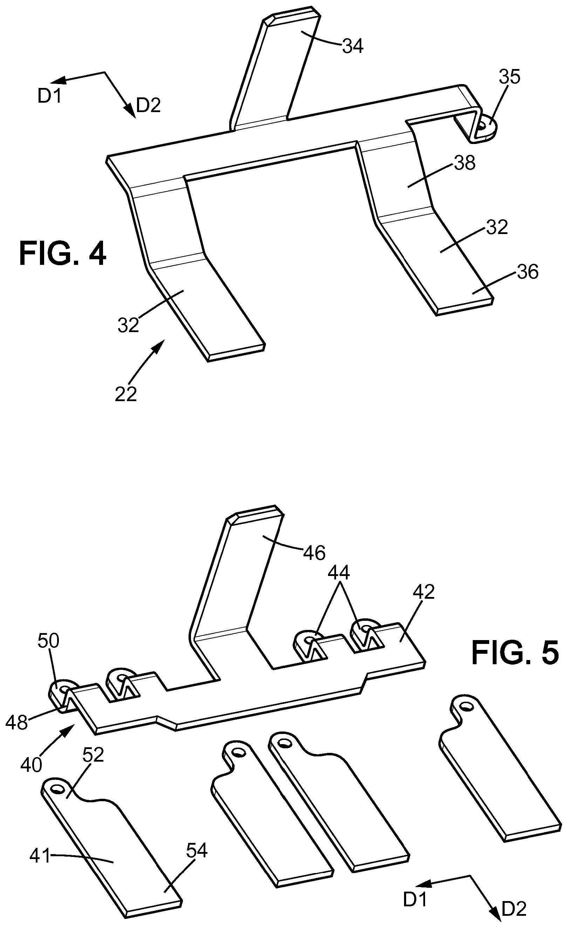

Tel que cela est représenté notamment sur la figure 4, la première barre de distribution électrique 22 comporte en outre une patte de fixation 35 par laquelle la première barre de distribution électrique 22 est fixée à la carte électronique 20. La patte de fixation 35 présente deux coudes formant une marche permettant la fixation de la première barre de distribution électrique 22 dans le plan P1 au-dessus de la carte électronique.

La deuxième liaison électrique comporte une deuxième barre de distribution électrique monobloc 40, quatre deuxièmes languettes conductrices 41 ainsi que la piste conductrice 26 et les interrupteurs 28.

La deuxième barre de distribution électrique 40 illustrée sur les figures 1, 2 et 5 comporte une deuxième bande conductrice 42, quatre pattes de fixation 44 et une deuxième fiche 46 de connexion conductrice solidaires du même bord de plus grande longueur de la deuxième bande 42.

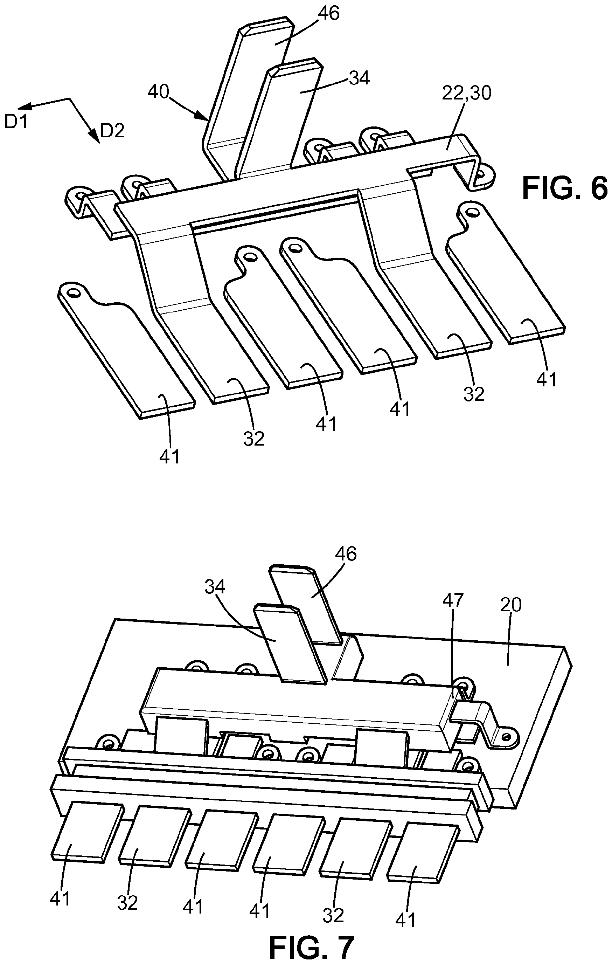

Tel que cela est représenté sur la figure 1, la deuxième bande 42 est allongée selon la première direction D1. Elle s'étend, tel que cela est visible sur la figure 2, dans un quatrième plan P4 parallèle au premier plan P1 et situé en dessous de celui-ci. Ainsi, la deuxième barre de distribution électrique 40 est agencée en dessous et à distance de la première bande 30. Un surmoulage 47 ou un enrobage dans un matériau isolant est réalisé autour de la première barre de distribution électrique 22 et de la deuxième barre de distribution électrique 40 afin d'une part, de pouvoir isoler électriquement la première barre de distribution électrique 22 de la deuxième barre de distribution électrique 40 et des deuxièmes languettes 41 et d'autre part, de solidariser la première barre de distribution électrique 22, la deuxième barre de distribution électrique 40 et les deuxièmes languettes 41. Ce surmoulage 47 est visible uniquement sur la figure 7.

Les pattes de fixation 44 permettent à la fois de fixer la deuxième barre de distribution électrique 40 à la carte électronique 20 et de réaliser un contact électrique entre la piste conductrice 26 et la deuxième barre de distribution électrique 40. Les pattes de fixation 44 réalisent la liaison électrique avec la piste conductrice 26. Chaque patte de fixation 44 présente la forme d'une marche par rapport à la deuxième bande 42. En particulier, tel que cela est visible sur la figure 5, elle comporte chacune une partie proximale 48 reliée à la deuxième bande 42 et coudée par rapport à celle-ci, et une partie distale 50 coudée par rapport à la partie proximale 48. En particulier, la partie proximale 48 s'étend perpendiculairement à la deuxième bande 42. La partie distale 50 s'étend parallèlement à la deuxième bande dans le plan P2. Chaque partie distale 50 présente un orifice de fixation à une piste conductrice 26 de la carte électronique.

La deuxième fiche 46 de connexion conductrice présente la forme d'un coude. Tel que cela est visible sur la figure 2, une partie inférieure est solidaire de la deuxième bande 42 et s'étend dans le plan P4. La partie supérieure s'étend dans un plan P5 sensiblement orthogonal au plan P2 de la deuxième bande 42. Le plan P5 est parallèle au plan P3. La deuxième fiche 46 est destinée à être connectée au deuxième plot 12 par des liaisons électriques non représentées.

Avantageusement, le positionnement de la deuxième barre de distribution électrique 40 en dessous de la première barre de distribution électrique 22 permet de réaliser un dispositif de connexion compact.

Les deuxièmes languettes conductrices 41 sont destinées à être mises en contact électrique avec les contacts électriques 18 des modules chauffants. Les deuxièmes languettes 41 sont formées par des plaquettes planes. Elles présentent une forme allongée qui s'étend selon la direction D2. Les deuxièmes languettes 41 présentent un plan principal qui s'étend dans le même plan P2 que le plan principal des premières languettes 32. Chaque deuxième languette 41 est fixée à une de ses extrémités 52 à la piste conductrice 26, par l'intermédiaire d'un orifice de fixation et d'un élément de fixation. L'extrémité libre 54 de chaque deuxième languette 41 s'étend en saillie par rapport à une face interne du boîtier 13 de dispositif de chauffage.

Chaque piste conductrice 26 connecte électriquement une deuxième languette 41 à une patte de fixation 44 de la deuxième barre de distribution électrique 40 pour transmettre de la puissance de la deuxième fiche 46 aux deuxièmes languettes 41. Afin de pouvoir mettre sélectivement sous tension l'une ou l'autre des deuxièmes languettes, un interrupteur 28, qui est de préférence un interrupteur électronique tel que par exemple un interrupteur de type MOSFET, est connecté sur chaque piste conductrice 26. Cet interrupteur 28 autorise ou interdit le passage du courant électrique entre chaque deuxième languette 41 et la deuxième barre de distribution électrique 40. Les interrupteurs 28 sont commandés par l'unité de commande, via des pilotes de commande.

Dans le mode de réalisation illustré sur la figure 1, les premières 32 et les deuxièmes 41 languettes conductrices sont disposées de haut en bas selon la succession suivante : deuxième languette 41, première languette 32, deuxième languette 41, deuxième languette 41, première languette 32 et deuxième languette 41.

En particulier, dans ce mode de réalisation, les trois languettes conductrices supérieures forment un premier ensemble 56. Les trois languettes conductrices inférieures forment un deuxième ensemble 58. Dans chaque ensemble 56, 58, une première languette conductrice 32 est disposée entre deux deuxièmes languettes conductrices 41.

A l'interface entre le premier ensemble 56 et le deuxième ensemble 58, une deuxième languette 41 d'un ensemble est située à côté d'une deuxième languette 41 de l'autre ensemble.

Enfin, dans un même ensemble, la distance entre une première languette 32 et une deuxième languette 41 est égale à la distance entre cette première languette 32 et l'autre deuxième languette 41. Cette distance est également égale à la distance d définie entre deux contacts électriques 18, 19 des modules chauffants.

Cette disposition permet d'équiper le dispositif de chauffage 8
soit d'un module chauffant 7 ayant deux rangées 16 d'éléments aptes à échanger de la chaleur et d'un module chauffant 6 ayant trois rangées 16 d'éléments aptes à échanger de la chaleur, comme illustré sur la figure 1, ou
soit de deux modules chauffants 6 ayant trois rangées 16 d'éléments aptes à échanger de la chaleur, comme illustré sur la figure 3.

Dans le cas d'un montage d'un module chauffant 7 ayant deux rangées d'éléments aptes à échanger de la chaleur et d'un module chauffant 6 ayant trois rangées d'éléments aptes à échanger de la chaleur, les modules chauffants peuvent être positionnés selon quatre agencements différents.

En effet, le module chauffant 6 ayant trois rangées d'éléments aptes à échanger de la chaleur peut être positionné contre les trois languettes conductrices 32, 41 supérieures en considérant la représentation de la figure 1. Dans ce cas, le module chauffant 7 ayant deux rangées d'éléments aptes à échanger de la chaleur peut être positionné contre les deux languettes conductrices 32, 41 inférieures comme visible sur la figure 1, ou contre la quatrième languette 41 et la cinquième languette 32 en comptant les languettes de haut en bas.

Le module chauffant 6 ayant trois rangées d'éléments aptes à échanger de la chaleur peut être positionné contre les trois languettes conductrices 41, 32 inférieures. Dans ce cas, le module chauffant 7 ayant deux rangées d'éléments aptes à échanger de la chaleur peut être positionné contre les deux languettes conductrices 32, 41 supérieures ou contre la deuxième languette 32 et la troisième languette 41 en comptant les languettes de haut en bas.

Ces différents positionnements permettent d'utiliser le même dispositif de chauffage 8 dans des installations de ventilation, chauffage et/ou climatisation ayant différentes architectures. Ces différents agencements permettent également de modifier la chaleur reçue par différentes couches d'air dans une même installation de ventilation, chauffage et/ou climatisation. Ainsi, il peut être prévu pour une installation donnée de chauffer de manière plus importante la couche d'air située en bas du boitier de l'installation car cette couche d'air sera ensuite dirigée, par exemple au moyen d'un volet, vers un conduit pied.

Lorsque les modules chauffants 6, 7 sont montés dans le dispositif de chauffage 8, les deuxièmes languettes conductrices 41 qui ne sont pas connectées électriquement à des contacts électriques 18, 19 des modules chauffants ne sont pas reliées électriquement aux plots correspondants 10, 12 de la source d'alimentation. Ces deuxièmes languettes conductrices 41 peuvent être déconnectées électriquement des contacts électriques 18, 19 au moyen d'interrupteur(s).

Dans le mode de réalisation illustré sur les figures 1 et 2, la distance entre la languette inférieure 41 du premier ensemble 56 et la languette supérieure du deuxième ensemble 58 est également égale à la distance d. Ainsi, le dispositif de connexion représenté sur ces figures pourrait également être équipé d'un module chauffant ayant une seule rangée 16 d'éléments aptes à échanger de la chaleur et d'un module chauffant ayant quatre rangées d'éléments aptes à échanger de la chaleur si les contacts électriques de ces rangées d'éléments aptes à échanger de la chaleur sont espacés de la distance d.

## Revendications

1. Dispositif de connexion électrique (2) destiné à connecter électriquement un premier plot (10) et un deuxième plot (12) d'une source d'alimentation électrique (4) et des contacts électriques (18, 19) de modules chauffants (6, 7), le premier plot (10) étant porté à un premier potentiel électrique différent du deuxième plot (12), ledit dispositif de connexion (2) comprenant :
- au moins une première languette conductrice électriquement (32), destinée à être connectée électriquement au premier plot (10) et à au moins un contact électrique (19) d'au moins un module chauffant (6, 7) ;
- au moins deux deuxièmes languettes conductrices électriquement, (41) destinées à être connectées électriquement au deuxième plot (12), et à d'autres contacts électriques (18) d'au moins un module chauffant (6, 7), **caractérisé en ce que**
le dispositif de connexion électrique comprend:
- N premières languettes conductrices (32), avec N entier naturel supérieur ou égal à 1;
- 2N deuxièmes languettes conductrices (41);
dans lequel le dispositif de connexion (2) est apte électriquement à connecter électriquement le premier plot (10) et le deuxième plot (12) et les contacts électriques (18, 19) d'un seul module chauffant (6, 7) et que le dispositif de connexion (2) est également apte à connecter électriquement le premier plot (10) et le deuxième plot (12) et les contacts électriques (18, 19) de plusieurs modules chauffants (6, 7), le nombre des contacts électriques (18, 19) de ce module chauffant (6, 7) et de chacun de ces modules chauffants (6, 7) pouvant être variable,
et dans lequel le dispositif comprend au moins deux ensembles (56, 58) de languettes conductrices (32, 41) disposés l'un à côté de l'autre, chaque ensemble (56, 58) comprenant une première languette conductrice (32) disposée entre deux deuxièmes languettes conductrices (41).

2. Dispositif de connexion électrique (2) selon la revendication 1, **caractérisé en ce que** le nombre de contacts électriques (18, 19) d'un module chauffant (6, 7) est compris entre deux et le nombre total de languettes conductrices (32, 41 ) du dispositif de connexion.

3. Dispositif de connexion électrique (2) selon l'une quelconque des revendications 1 ou 2, **caractérisé en ce qu'**il est apte à être connecté à au moins un module chauffant selon une première configuration (6) où toutes les languettes conductrices (32, 41 ) sont connectées électriquement à des contacts électriques (18, 19) du module chauffant ou des modules chauffants, et une deuxième configuration (7) où seule une partie des languettes conductrices (32, 41 ) est connectée électriquement à des contacts électriques (18, 19) du module chauffant ou des modules chauffants.

4. Dispositif de connexion électrique (2) selon l'une quelconque des revendications 1 à 3, **caractérisé en ce que** les languettes conductrices (32, 41 ) sont aptes à être déconnectées électriquement des plots correspondants (10, 12) de la source d'alimentation (4).

5. Dispositif de connexion électrique (2) selon la revendication 4, **caractérisé en ce que** lorsque les languettes conductrices (32, 41 ) sont connectées à des modules chauffants selon la deuxième configuration (7), les languettes conductrices (32, 41 ) qui ne sont pas connectées électriquement à des contacts électriques (18, 19) des modules chauffants sont déconnectées électriquement des plots correspondants (10, 12) de la source d'alimentation.

6. Dispositif de connexion électrique (2) selon l'une quelconque des revendications précédentes, qui comprend deux deuxièmes languettes conductrices (41 ) disposées l'une à côté de l'autre.

7. Dispositif de connexion électrique (2) selon l'une des revendications précdentes, dans lequel dans un même ensemble (56, 58), la distance (d) entre la première languette conductrice (32) et l'une des deuxièmes languettes conductrices (41 ) est égale à la distance (d) entre la première languette conductrice (32) et l'autre des deuxièmes languettes conductrices (41 ).

8. Dispositif de connexion électrique (2) selon l'une quelconque des revendications précédentes, dans lequel les premières languettes conductrices (32) et les deuxièmes languettes conductrices (41 ) ont un plan principal qui s'étend dans le même plan (P2).

9. Dispositif de connexion électrique (2) selon l'une quelconque des revendications précédentes, dans lequel les deuxièmes languettes conductrices (41 ) sont propres à être connectées à la masse ou à un potentiel électrique négatif.

10. Dispositif de connexion électrique (2) selon l'une quelconque des revendications 1 à 8 , dans lequel les deuxièmes languettes conductrices (41 ) sont propres à être connectées à un potentiel électrique positif.

11. Dispositif de chauffage (8) destiné à chauffer un flux d'air circulant à l'intérieur d'une installation de ventilation, chauffage et/ou de climatisation, ledit dispositif de chauffage (8) comportant un boîtier (13), un dispositif de connexion électrique (2) selon l'une des revendications 1 à 10 monté dans le boîtier (13), au moins un module chauffant (6, 7) comprenant au moins deux contacts électriques (18, 19).

12. Installation de ventilation, chauffage et/ou climatisation d'un véhicule automobile comportant au moins un dispositif de chauffage (8) selon la revendication 11.

## Patentansprüche

1. Elektrische Verbindungsvorrichtung (2), die dazu bestimmt ist, einen ersten Stift (10) und einen zweiten Stift (12) einer Stromversorgungsquelle (4) und elektrische Kontakte (18, 19) von Heizmodulen (6, 7) elektrisch zu verbinden, wobei der erste Stift (10) auf ein erstes elektrisches Potential gebracht ist, das vom zweiten Stift (12) verschieden ist, wobei die Verbindungsvorrichtung (2) Folgendes umfasst:
- mindestens eine erste elektrisch leitende Lasche (32), die dazu bestimmt ist, mit dem ersten Stift (10) und mindestens einem elektrischen Kontakt (19) mindestens eines Heizmoduls (6, 7) elektrisch verbunden zu sein;
- mindestens zwei zweite elektrisch leitende Laschen (41), die dazu bestimmt sind, mit dem zweiten Stift (12) und anderen elektrischen Kontakten (18) mindestens eines Heizmoduls (6, 7) elektrisch verbunden zu sein, **dadurch gekennzeichnet, dass** die elektrische Verbindungsvorrichtung Folgendes umfasst:
- N erste leitende Laschen (32), wobei N eine natürliche Zahl größer als oder gleich 1 ist;
- 2N zweite leitende Laschen (41);
wobei die Verbindungsvorrichtung (2) elektrisch dazu geeignet ist, den ersten Stift (10) und den zweiten Stift (12) und die elektrischen Kontakte (18, 19) eines einzelnen Heizmoduls (6, 7) elektrisch zu verbinden, und dass die Verbindungsvorrichtung (2) ebenfalls geeignet ist, den ersten Stift (10) und den zweiten Stift (12) und die elektrischen Kontakte (18, 19) mehrerer Heizmodule (6, 7) elektrisch zu verbinden, wobei die Anzahl der elektrischen Kontakte (18, 19) dieses Heizmoduls (6, 7) und jedes dieser Heizmodule (6, 7) variabel sein kann, und wobei die Vorrichtung mindestens zwei Anordnungen (56, 58) von leitenden Laschen (32, 41) umfasst, die nebeneinander angeordnet sind, wobei jede Anordnung (56, 58) eine erste leitende Lasche (32) umfasst, die zwischen zwei zweiten leitenden Laschen (41) angeordnet ist.

2. Elektrische Verbindungsvorrichtung (2) nach Anspruch 1, **dadurch gekennzeichnet, dass** die Anzahl von elektrischen Kontakten (18, 19) eines Heizmoduls (6, 7), zwischen zwei und der Gesamtzahl von leitenden Laschen (32, 41) der Verbindungsvorrichtung liegt.

3. Elektrische Verbindungsvorrichtung (2) nach einem der Ansprüche 1 oder 2, **dadurch gekennzeichnet, dass** sie geeignet ist, mit mindestens einem Heizmodul nach einer ersten Ausgestaltung (6), bei der alle leitenden Laschen (32, 41) mit elektrischen Kontakten (18, 19) des Heizmoduls oder der Heizmodule elektrisch verbunden sind, und einer zweiten Ausgestaltung (7), bei der nur ein Anteil der leitenden Laschen (32, 41) mit elektrischen Kontakten (18, 19) des Heizmoduls oder der Heizmodule elektrisch verbunden ist, verbunden zu sein.

4. Elektrische Verbindungsvorrichtung (2) nach einem der Ansprüche 1 bis 3, **dadurch gekennzeichnet, dass** die leitenden Laschen (32, 41) geeignet sind, von den entsprechenden Stiften (10, 12) der Stromquelle (4) elektrisch getrennt zu sein.

5. Elektrische Verbindungsvorrichtung (2) nach Anspruch 4, **dadurch gekennzeichnet, dass**, wenn die leitenden Laschen (32, 41) mit Heizmodulen nach der zweiten Ausgestaltung (7) verbunden sind, die leitenden Laschen (32, 41), die nicht mit elektrischen Kontakten (18, 19) der Heizmodule elektrisch verbunden sind, von den entsprechenden Stiften (10, 12) der Stromquelle elektrisch getrennt sind.

6. Elektrische Verbindungsvorrichtung (2) nach einem der vorhergehenden Ansprüche, die zwei zweite leitende Laschen (41) umfasst, die nebeneinander angeordnet sind.

7. Elektrische Verbindungsvorrichtung (2) nach einem der vorhergehenden Ansprüche, wobei in einer selben Anordnung (56, 58) der Abstand (d) zwischen der ersten leitenden Lasche (32) und einer der zweiten leitenden Laschen (41) gleich dem Abstand (d) zwischen der ersten leitenden Lasche (32) und der anderen der zweiten leitenden Laschen (41) ist.

8. Elektrische Verbindungsvorrichtung (2) nach einem der vorhergehenden Ansprüche, wobei die ersten leitenden Laschen (32) und die zweiten leitenden Laschen (41) eine Hauptebene aufweisen, die sich in derselben Ebene (P2) erstreckt.

9. Elektrische Verbindungsvorrichtung (2) nach einem der vorhergehenden Ansprüche, wobei die zweiten leitenden Laschen (41) geeignet sind, an die Masse oder ein negatives elektrisches Potential angeschlossen zu sein.

10. Elektrische Verbindungsvorrichtung (2) nach einem der Ansprüche 1 bis 9, wobei die zweiten leitenden Laschen (41) geeignet sind, an ein positives elektrisches Potential angeschlossen zu sein.

11. Heizvorrichtung (8) zur Erwärmung eines Luftstroms, der innerhalb einer Belüftungs-, Heizungs- und/oder Klimasteuerungsanlage zirkuliert, wobei die Heizvorrichtung (8) ein Gehäuse (13), eine elektrische Verbindungsvorrichtung (2) nach einem der Ansprüche 1 bis 10, die im Gehäuse (13) eingebaut ist, mindestens ein Heizmodul (6, 7) mit mindestens zwei elektrischen Kontakten (18, 19) aufweist.

12. Belüftungs-, Heizungs- und/oder Klimasteuerungsanlage eines Kraftfahrzeugs, die mindestens eine Heizvorrichtung (8) nach Anspruch 11 aufweist.

## Claims

1. Electrical connection device (2) intended for the electrical connection of a first pad (10) and a second pad (12) of an electrical power source (4) and electrical contacts (18, 19) of heating modules (6, 7), the first pad (10) being at a first electrical potential that is different from that of the second pad (12), said connection device (2) comprising:
- at least one first electrically conductive tab (32), intended to be electrically connected to the first pad (10) and to at least one electrical contact (19) of at least one heating module (6, 7);
- at least two second electrically conductive tabs (41), intended to be electrically connected to the second tab (12), and to other electrical contacts (18) of at least one heating module (6, 7), **characterized in that** the electrical connection device comprises:
- N first conductive tabs (32), where N is a natural integer greater than or equal to 1;
- 2N second conductive tabs (41);
wherein the connection device (2) is electrically capable of electrically connecting the first pad (10) and the second pad (12) and the electrical contacts (18, 19) of a single heating module (6, 7) and that the connection device (2) is also capable of electrically connecting the first pad (10) and the second pad (12) and the electrical contacts (18, 19) of a plurality of heating modules (6, 7), the number of the electrical contacts (18, 19) of this heating module (6, 7) and of each of these heating modules (6, 7) being able to vary,
and wherein the device comprises at least two assemblies (56, 58) of conductive tabs (32, 41) arranged side by side, each assembly (56, 58) comprising a first conductive tab (32) arranged between two second conductive tabs (41).

2. Electrical connection device (2) according to Claim 1, **characterized in that** the number of electrical contacts (18, 19) of a heating module (6, 7) is comprised between two and the total number of conductive tabs (32, 41) of the connection device.

3. Electrical connection device (2) according to either of Claims 1 and 2, **characterized in that** it is capable of being connected to at least one heating module in a first configuration (6) in which all of the conductive tabs (32, 41) are electrically connected to electrical contacts (18, 19) of the one or more heating modules, and a second configuration (7) in which only a portion of the conductive tabs (32, 41) is electrically connected to electrical contacts (18, 19) of the one or more heating modules.

4. Electrical connection device (2) according to any one of Claims 1 to 3, **characterized in that** the conductive tabs (32, 41) are capable of being electrically disconnected from the corresponding pads (10, 12) of the power source (4).

5. Electrical connection device (2) according to Claim 4, **characterized in that** when the conductive tabs (32, 41) are connected to heating modules in the second configuration (7), those conductive tabs (32, 41) which are not electrically connected to electrical contacts (18, 19) of the heating modules are electrically disconnected from the corresponding pads (10, 12) of the power source.

6. Electrical connection device (2) according to any one of the preceding claims, comprising two second conductive tabs (41) arranged side by side.

7. Electrical connection device (2) according to one of the preceding claims, wherein in one and the same assembly (56, 58), the distance (d) between the first conductive tab (32) and one of the second conductive tabs (41) is equal to the distance (d) between the first conductive tab (32) and the other of the second conductive tabs (41).

8. Electrical connection device (2) according to any one of the preceding claims, wherein the first conductive tabs (32) and the second conductive tabs (41) have a main plane that lies in the same plane (P2).

9. Electrical connection device (2) according to any one of the preceding claims, wherein the second conductive tabs (41) are suitable for being connected to ground or to a negative electrical potential.

10. Electrical connection device (2) according to any one of Claims 1 to 9, wherein the second conductive tabs (41) are suitable for being connected to a positive electrical potential.

11. Heating device (8) intended for heating an airflow circulating inside a ventilation, heating and/or air-conditioning installation, said heating device (8) including a housing (13), an electrical connection device (2) according to one of Claims 1 to 10 mounted in the housing (13) and at least one heating module (6, 7) comprising at least two electrical contacts (18, 19).

12. Ventilation, heating and/or air-conditioning installation of a motor vehicle including at least one heating device (8) according to Claim 11.
